# EUROPÄISCHE PATENTSCHRIFT

(11) **EP 1 998 955 B1**
(45) Veröffentlichungstag und Bekanntmachung des Hinweises auf die Patenterteilung: **29.06.2011**
(21) Anmeldenummer: 07764515.8
(22) Anmeldetag: 25.01.2007
(51) Int. Cl.: B32B 27/00

(54) **ABDECKMATERIAL FUER BIOMASSE UND VERFAHREN ZU DESSEN HERSTELLUNG**
COVERING MATERIAL FOR BIOMASS, AND PROCESS FOR ITS PREPARATION
MATERIAU DE RECOUVREMENT DE BIOMASSE ET PROCEDE POUR SA FABRICATION

(30) Priorität: 30.03.2006 DE 102006014862
(43) Veröffentlichungstag der Anmeldung: 10.12.2008
(73) Patentinhaber: Fraunhofer-Gesellschaft zur Förderung der angewandten Forschung e.V., 80686 München (DE); Technologie- Und Foerderzentrum, 94315 Straubing (DE)
(72) Erfinder: ROEDER, Olaf, 01326 Dresden (DE); REMMELE, Edgar, 94315 Straubing (DE); KIRCHHOFF, Volker, 01324 Dresden (DE); BARTEL, Rainer, 01324 Dresden (DE); SCHWARZ, Wolfgang, 01279 Dresden (DE)
(86) Internationale Anmeldenummer: PCT/EP2007/000610
(87) Internationale Veröffentlichungsnummer: WO 2007/112799

(56) Entgegenhaltungen:
- FR-A1- 2 633 803
- US-A- 2 719 802
- US-A- 3 911 620

## Beschreibung

Die Erfindung betrifft ein Abdeckmaterial für Biomasse und ein Verfahren zu dessen Herstellung, wobei das Abdeckmaterial aus natürlichen und nachwachsenden Rohstoffen besteht. Unter Biomasse sind hierbei sämtliche Stoffe organischer Herkunft, das heißt kohlenstoffhaltige Materie, zu verstehen, die als nachwachsender Rohstoff bei der Energiegewinnung oder zur stofflichen Nutzung Anwendung finden, wie beispielsweise bei der Gewinnung von Biogas, der Herstellung von flüssigen Energieträgern (zum Beispiel Biomassto-Liquid-Kraftstoffe) oder bei der Energiegewinnung durch Verbrennen, und für diesen Zweck auf Vorrat gelagert werden.

Biogas wird in einem gesteuerten Prozess in Biogasanlagen gewonnen. In diesen Anlagen können nahezu alle organischen Substanzen durch biochemische Prozesse abgebaut werden. Dabei entsteht im Wesentlichen Methan, das als Energieträger genutzt wird. Weiterhin entstehen als Nebenprodukte Kohlenstoffdioxid und Wasserdampf sowie geringe Mengen an Stickstoff, Wasserstoff, Sauerstoff und weiterer Gase.

Voraussetzung für eine erfolgreiche Methanbildung ist neben dem Wassergehalt der Biomasse der Ausschluss von Luftsauerstoff, da die biochemischen Einzelprozesse durch anaerobe Mikroorganismen ablaufen. Aufgrund der Anpassungsfähigkeit dieser Mikroorganismen an die Prozessbedingungen können nahezu alle organischen Substanzen in Biogasanlagen abgebaut werden. Zur Biogasgewinnung werden vorrangig eingesetzt: Fäkalien aus der Tierhaltung, Pflanzen- und Tierabfälle, Produktionsabfälle wie Fette, Glycerin usw. sowie gezielt angebaute nachwachsende Rohstoffe wie beispielsweise Mais, Getreide, Hirsen, Ölfrüchte, Rüben und andere Gräser.

Bei der in zunehmendem Umfang praktizierten gezielten Produktion nachwachsender Rohstoffe wie Mais, Getreide, Hirsen, Ölfrüchte, Rüben und andere Gräser für die Biogasgewinnung muss die Biomasse nach der Ernte zunächst zur Bevorratung gelagert werden. Dazu dienen in der Regel Freilandlager. Die Verwertung zu Biogas erfolgt kontinuierlich über das gesamte Jahr, so dass die gelagerte Biomasse erst nach und nach verbraucht wird. Während der Lagerung laufen bereits die biochemischen Prozesse der Hydrolyse, Versäuerung und Essigsäurebildung ab. Diese ersten Phasen sind Vorstufen der Biogaserzeugung und werden auch von anaeroben Bakterien gesteuert. Daher muss bereits während der Lagerung des Erntegutes der Zutritt von Luftsauerstoff in das Lager ausgeschlossen werden.

### Stand der Technik

Bisher werden Biomasselager mittels Folien abgedeckt, die zur wirksamen Abdichtung häufig in mehreren Lagen angeordnet sind. Zum Einsatz kommen Folien aus Kunststoff wie beispielsweise Polyethylen. Derartige Folien sind bei entsprechender Dicke von mindestens 200 µm ausreichend gasdicht. Sie müssen den bei den biochemischen Reaktionen sowie durch Sonneneinstrahlung auftretenden Temperaturen von bis zu ca. 80 °C standhalten und dabei hohe Festigkeits- und Elastizitätswerte aufweisen, um Umwelteinflüssen standzuhalten. Weiterhin ist die Beständigkeit gegen die bei der biochemischen Umsetzung durch Gärung entstehenden Säuren erforderlich.

Die Anforderungen insbesondere des Ausschlusses von Luftsauerstoff werden zum Teil nur unzureichend erfüllt, da beispielsweise bei der Abdeckung der Biomasse durch Unebenheiten der Oberfläche Lufteinschlüsse zwischen Abdeckfolie und Biomasse entstehen, welche die gewünschten anaeroben biochemischen Prozesse behindern oder sogar partiell vollständig ausschließen.

Erhebliche Probleme bereitet das Abdecken sehr großer Biomasselager, da Folien nur in begrenzter Breite zur Verfügung stehen. An Überlappungsstellen von Folien ist der Zutritt von Luft in der Praxis nicht auszuschließen. Zum Abdecken eines Lagers von beispielsweise 4.000 m² Flächenausdehnung beträgt die Masse einer Folie bereits 800 kg bis 1.000 kg. Das Aufbringen und Ausbreiten der Folien ist daher nur mit großem Personaleinsatz und schwerer Technik möglich. Zusätzlich müssen die Folien beschwert werden, um dem Abdecken und Zerstören der Freilager durch angreifenden Wind vorzubeugen. Dazu dienen in der Regel schwere Sandsäcke von ca. 30 kg Gewicht. Pro 1.000 m² Biomasselager sind dafür ca. 1.500 - 1.700 Sandsäcke oder andere Beschwerungsobjekte, wie zum Beispiel Altreifen mit einem Gesamtgewicht von etwa 50 t erforderlich. Der Trend geht bereits zu noch größeren Biomasselagern, die mit herkömmlichen Foliensystemen praktisch nicht mehr mit vertretbarem Aufwand abdeckbar sind.

Ein weiteres Problem ist das Separieren und Entsorgen der Kunststoff-Folien im Zuge des Verwertens der Biomasse. Die Biomasse wird an einer Seite eines Lagers beginnend sukzessive entnommen und in einer Biogasanlage verwertet. Die Abdeckung muss dabei täglich über einer Breite der Biomasse von oft mehr als 15 m zurückgeschlagen und abgetrennt werden. Diese Arbeit ist nur manuell ausführbar. Dabei hat die Anschnittfläche oft eine Höhe von mehr als 10 m und kann zum Schutz vor Absturz der Arbeitskräfte nicht gesichert werden. Das Arbeiten auf einem derartigen Biomasselager ist somit sehr aufwändig und gefährlich. Weiterhin bereitet das Verwerten der entfernten alten Folienabdeckung erhebliche Probleme, da die Folie durch anhaftende Biomasse verunreinigt ist und deshalb häufig entsorgt werden muss. Das Entsorgen verbrauchter Abdeckfolie ist daher auch mit erheblichen Kosten verbunden.

Bekannte Abdecksysteme für Biomasselager erfordern folglich einen erheblichen personellen, finanziellen und zeitlichen Aufwand zum Herstellen der Abdeckung, für das Handling der Folien und der Folienbeschwerung sowie beim Entsorgen und sind daher nicht zufriedenstellend. Ein Abdeckmaterial für Biomasse bestehend aus einer Mischung von zwei Komponenten ist sowohl aus der US-A-3 911 620 als auch aus der US-A-2 719 802 bekannt.

### Aufgabenstellung

Der Erfindung liegt daher das technische Problem zugrunde, ein Abdeckmaterial für Biomasse sowie ein Verfahren zu seiner Herstellung zu schaffen, wobei das Abdeckmaterial beständig gegen Umwelteinflüsse und die in der Biomasse entstehenden biochemischen Abbauprodukte sein soll, gegenüber bekannten Abdeckmaterialien weniger Luft zwischen Biomasse und Abdeckmaterial einschließen soll, nicht teurer in der Herstellung sein darf und möglichst einen geringeren Aufwand beim Verwerten bzw. Entsorgen erfordert.

Die Lösung des technischen Problems ergibt sich durch die Gegenstände mit den Merkmalen der Patentansprüche 1 und 11. Weitere vorteilhafte Ausgestaltungen der Erfindung ergeben sich aus den abhängigen Patentansprüchen.

Es wurde ein Material und ein Verfahren zu seiner Herstellung entwickelt, mit dem vorzugsweise Biomasselager einfach und sicher abgedeckt und gegen den Zutritt von Luft sowie die Einwirkung von Umwelteinflüssen geschützt werden können.

Aus dem Dentalbereich sind Materialien auf Alginatbasis als Abformmaterialien bekannt. Sie bilden nach Mischung mit Wasser elastische Werkstoffe, die nach erfolgter Reaktion in Wasser unlöslich sind. Dentalalginate (US 2,345,255) werden seit langer Zeit eingesetzt, auch unter Verwendung von Additiven zum Verhindern einer Staubentwicklung, die beim Anrühren des Pulvers auftreten kann. Derartige Materialien sind als Dentalabformmassen geeignet. Sie sind jedoch für die erfindungsgemäßen Aufgaben unbrauchbar, da sie unter Lagerung an Luft nur über wenige Tage formstabil und elastisch bleiben. Dentalalginate binden Wasser nicht chemisch stabil, sodass nach kurzer Zeit das Wasser durch Verdunstung entweicht. Nach Lagerung der Dentalalginate über einige Tage setzt durch Wasserverdunstung eine starke Versprödung und Schrumpfung des Werkstoffs ein und macht es in dieser Form unbrauchbar zur Lösung der Aufgabenstellung.

Es wurde gefunden, dass übliche Dentalalginatmischungen bezogen auf deren Masse etwa 60 - 80 % eines pflanzlichen Öls wie zum Beispiel Leinöl oder Rapsöl aufnehmen und binden können. Nach dem Gelieren tritt zunächst kein Öl aus und die Masse hat gute elastische Eigenschaften. Mit fortschreitender Verdunstung des Wassers tritt eine mäßige Schrumpfung des ölgefüllten Alginatmaterials sowie auch Versprödung ein. Ein Teil des gebundenen Öls schwitzt aus und bildet einen Film auf der Oberfläche des Materials.

Ein erfindungsgemäßes Abdeckmaterial wird daher gewonnen, indem mindestens zwei getrennt lagerfähige Komponenten A und B miteinander vermischt werden. Die Hauptbestandteile der Komponenten entstammen vorwiegend natürlichen und nachwachsenden Ressourcen und können zum überwiegenden Teil selbst in Biogasanlagen verwertet werden. Hauptbestandteile der Komponente A sind Öl tierischer oder pflanzlicher Herkunft, vorzugsweise aus natürlichen und nachwachsenden Ressourcen, wie beispielsweise Leinöl, Rapsöl, Sonnenblumenöl, Sojaöl, Palmöl, Palmkernöl, Kokosöl, Leindotteröl oder/und Maisöl, sowie als Trägermedium ein Netzwerkbildner (Alginat), der aus Algen gewonnen wird. Als Alginat können beispielsweise Natriumalginat oder Kaliumalginat verwendet werden. Komponente B umfasst einen netzwerkunterstützenden Emulgator. Als Emulgator ist beispielsweise eine wässrige Latexdispersion geeignet. Unter dem Begriff wässrige Latexdispersion soll hierbei eine wässrige Dispersion von Kohlenwasserstoffpolymeren verstanden werden, die einerseits zum Beispiel als Naturlatex oder Naturkautschuk als nachwachsende Rohstoffe in der Natur vorhanden sind und aus Bäumen oder anderen Pflanzen gewonnen werden oder andererseits synthetisch hergestellt werden und ähnliche Eigenschaften wie Naturlatex / Naturkautschuk aufweisen.

Es besteht jedoch auch die Möglichkeit, ein in Wasser gelöstes pflanzliches oder tierisches Protein oder Proteinisolat (beispielsweise Sojaprotein) oder eine Mischung von in Wasser gelöstem Protein/Proteinisolat und einer Latexdispersion als netzwerkunterstützenden Emulgator zu verwenden.

Den Komponenten A oder/und B oder auch dem Mix aus beiden Komponenten können wahlweise noch Hilfs- und Füllstoffe, Konservierungsstoffe, Regulatoren zum Einstellen der Reaktionszeit sowie Wasser beigemengt werden. Die fließfähigen Komponenten A und B können getrennt gelagert, transportiert sowie einzeln gefördert und mit Hilfe üblicher Mixtechniken gemischt werden.

Nach dem Mischen der Komponenten A und B per Hand oder zum Beispiel in einem Industriemixer liegt das Material zunächst in fließfähiger Form vor. Die Zähigkeit und das Fließverhalten können durch Wahl der Füllstoffe sowie Variation der Mengenanteile der Komponenten eingestellt werden.

In der Mischung aus den Komponenten A und B reagiert in einem ersten Schritt das Alginat mit dem Wasser und bildet ein Netzwerk N₁, wobei Wasser, Öl und wenn vorhanden auch Füllstoffe in das Netzwerk N₁ eingebaut werden. Gleichzeitig bildet der Emulgator durch Entzug von Wasser ein Netzwerk N₂ aus, das sich mit dem Netzwerk N₁ eng verzahnt, wobei die Gesamt-Netzwerkstruktur N₁+N₂ alle in der Mischung vorliegenden Komponenten in ihrer Gesamtheit derart bindet, dass ein für erfindungsgemäße Anwendungen geeignetes Material entsteht.

Vorteilhafterweise werden Kreide oder/und Kieselgur als Füllstoffe verwendet, da diese (vermutlich aufgrund ihrer Oberflächenstruktur) das Verzahnen der Netzwerkstrukturen N₁ und N₂ unterstützen. Es können jedoch auch andere Stoffe, insbesondere biologisch abbaubare Stoffe als Füllstoffe verwendet werden, wie Stärke, modifizierte Stärke, Zucker, Zellulose als Faser oder in kubischer Struktur, die beispielsweise aus Hölzern oder anderen Pflanzen gewonnen werden.

Durch Zugabe von Beschleunigern bzw. Verzögerern kann die Reaktionszeit des Materials in weiten Grenzen von wenigen Minuten bis zu mehreren Stunden eingestellt werden. Während dieser Zeit, auch Topfzeit genannt, ist das Applizieren des Materials zum Beispiel durch Spritzen, Gießen, Streichen, Rakeln, Spachteln oder ähnliche Verfahren auf die abzudeckende Biomasse möglich. Die für die jeweilige Auftragstechnik optimale Topfzeit wird durch Wahl der Anteile an Beschleunigern bzw. Verzögerern eingestellt.

Als Verzögerer der Reaktionszeit können der Komponente A beispielsweise Natriumphosphat oder/und Calciumsulfat zugesetzt werden. Weiterhin können der Komponente B Verzögerer in Form von beipielsweise Kaliumhydroxid, Natriumhydroxid oder Ammoniak beigemischt werden. Zugaben von Säuren in Komponente B wie zum Beispiel Essigsäure, Zitronensäure, Propionsäure usw. wirken hingegen als Beschleuniger des Vernetzungsvorgangs.

Das erfindungsgemäße Material zeichnet sich nach dem Abbinden dahingehend aus, dass es unter den geforderten Bedingungen des Abdeckens von Biomasselagern beständig ist, beim Einbringen in eine Biogasanlage jedoch überwiegend abgebaut wird. Dies liegt daran, dass das Alginat-Netzwerk N₁ im alkalischen, neutralen und sogar bis leicht sauren pH-Bereich beständig und wasserunlöslich ist. Im stärker sauren Bereich wird jedoch Alginsäure ausgefällt, wodurch das Alginat-Netzwerk zerfällt. Weiterhin ist die Netzwerkstruktur N₂ durch Koagulation des Emulgators ausgebildet und nicht durch Schwefelbrückenbindungen vernetzt und kann daher ebenfalls biologisch abgebaut werden. Natürliche Emulgatoren wie beispielsweise Proteine sind biologisch ausgezeichnet abbaubar.

Bei einer vorteilhaften Ausgestaltung wird das Abdeckmaterial unter Verwendung von mindestens einem weiteren Inhaltsstoff als Schaum ausgebildet.

Eine Variante zur Schaumbildung besteht darin, in Komponente A ein Treibmittel wie beispielsweise ein Hydrogenkarbonat (zum Beispiel Natriumhydrogenkarbonat oder Ammoniumhydrogenkarbonat) zu integrieren, das durch chemische Reaktion ein Treibgas abspaltet. Die Reaktion des Treibgasabspaltens wird durch Zuführen eines sauren Reaktionspartners in die Materialmischung ausgelöst. Im Falle der Verwendung eines Hydrogenkarbonats als Gasbildner dient als Reaktionspartner beispielsweise Zitronensäure oder Propionsäure. Zum Bilden eines Schaumes werden die zwei getrennt lagerfähigen Komponenten A und B in beschriebener Weise zunächst gemischt. Erst mit dem Vorgang des Auftragens als Flächengebilde erfolgt die Zumischung des Reaktionspartners. Es ist jedoch auch möglich die Komponenten A und B sowie den Reaktionspartner gemeinsam, erst mit dem Vorgang des Auftragens als Flächengebilde, zu vermischen.

Die gemischten Komponenten reagieren in beschriebener Weise, wobei der saure Reaktionspartner eine parallel mit der Bildung der Gesamt-Netzwerkstruktur N₁+N₂ ablaufende Reaktion in der Weise auslöst, dass einerseits die chemische Reaktion der Treibgasbildung durch eine Freisetzung von beispielsweise CO₂, im Falle der Verwendung eines Hydrogenkarbonats, erfolgt und zu einer Volumenvergrößerung des Materials führt sowie parallel dazu der pH-Wert der Materialmischung aus dem alkalischen ins saure Milieu umschlägt, wodurch die Bildung des Emulgator-Netzwerkes N₂ beschleunigt abläuft. Auf diese Weise wird ein Aufschäumen des Materials und eine gleichzeitig schnelle Fixierung und Verfestigung erreicht.

Bei einer zweiten Variante des Materialaufschäumens dient als Gasbildner ein unedles Metall wie zum Beispiel Magnesium, Eisen, Aluminium oder/und Zink, das in Pulverform in Komponente A dispergiert wird. Eine besondere Eignung zum Aufschäumen des erfindungsgemäßen Materials wurde für Aluminiumpulver gefunden, das insbesondere im vorliegenden alkalischen Milieu als Treibmittel wirkt. Begünstigend wirkt sich dabei die Anwesenheit von Hydroxidionen aus, zum Beispiel durch Verwendung von Kaliumhydroxid oder/und Natriumhydroxid. Nach dem Mischen der Komponenten A und B kommt es durch die Reaktion des Aluminiums mit Wasser zum Abspalten von Wasserstoff, das als Treibgas wirkt. D. h., Wasser aus der wässrigen Latexdispersion bzw. Wasser, das der Mischung noch zusätzlich beigefügt wird, wirkt als Reaktionspartner des Gasbildners Metallpulver. Dabei verläuft die Reaktion schwach bis heftig, wobei die Reaktionsgeschwindigkeit durch den pH-Wert, insbesondere beispielsweise durch die Konzentration des Natriumhydroxid oder/und Kaliumhydroxid sowie durch die Temperatur der Mischung gesteuert werden kann.

In einer weiteren vorteilhaften Ausgestaltungsvariante des Verfahrens zum Herstellen eines Flächengebildes aus Abdeckmaterial erfolgt das Mischen und Auftragen mit Hilfe von Mehrkomponenten-Spritzsystemen, wie beispielsweise Mehrkomponenten-Spritzpistolen. Die Komponenten A und B werden dem Mehrkomponenten-Spritzsystem einzeln unter Druck zugeführt, in der dort integrierten Mischkammer gemischt und als Sprühstrahl gegebenenfalls unter Verwendung von zum Beispiel Druckluft auf die Oberfläche der Biomasse aufgetragen. Aufgrund der Reaktionszeit der Komponenten und der hohen Partikelgeschwindigkeit beim Spritzen erfolgt die Reaktion des Materials erst nach dem Auftreffen auf die Oberfläche.

Beim Ausbilden des Materials als Schaum setzt die Gasbildung ebenfalls erst nach dem Applizieren auf der Oberfläche ein. In einer ersten Phase nach dem Mischen und Austreten aus dem Mehrkomponenten-Spritzsystem trifft das gespritzte Material auf die Oberfläche der Biomassepartikel auf und benetzt diese, worauf zeitlich nachfolgend die zweite Phase des Aufschäumens und als dritte Phase die Verfestigung des Materials erfolgt. Während der zweiten Phase kommt es durch Treibgasentwicklung des Treibmittels zur Volumenvergrößerung des Materials, wodurch der Einschluss abstehender Fasern und Partikel der Biomasse erreicht wird und im Zuge der weiteren Expansion des Abdeckmaterials das Schließen des Materialfilms zu einem homogenen, kontinuierlichen Flächengebilde erfolgt. Nach Abschluss der dritten Phase, dem Verfestigen des Materials, liegt das erfindungsgemäße Material als geschlossenporig aufgeschäumtes, luftdichtes und wetterfestes Flächengebilde vor. Die eingeschlossenen Fasern und Partikel der Biomasse bewirken ein Verzahnen mit der darunter liegenden Gesamtmasse, wodurch das Flächengebilde fest verankert und auch ohne zusätzliches Beschweren gegen den Einfluss von angreifendem Wind stabil ist. Aufgrund guter Klebeeigenschaften des Materials wird ein dichter Anschluss des Flächengebildes an Boden und Wänden sowie eine zusätzliche mechanische Verankerung erreicht. Durch das Aufschäumen verringert sich darüber hinaus die erforderliche Materialmenge, wobei die Wärmeisolation zusätzlich verbessert wird.

Die Erfindung wird nachfolgend anhand eines bevorzugten Ausführungsbeispiels näher erläutert ohne den Umfang der Erfindung auf die dabei angegebene Materialzusammensetzung zu beschränken.

In einem ersten Schritt erfolgt das Zusammenstellen der Komponenten A und B.

Als Komponente A werden vermischt: Leinöl und Natriumalginat, denen Kreide und Kieselgur als Füllstoff sowie Natriumphosphat und Calciumsulfat als Verzögerer beigegeben wird. Komponente B umfasst eine Mischung aus einer 60-prozentigen Naturlatex-Dispersion, der Wasser, Kaliumhydroxid als Verzögerer und Zinkoxid als Konservierungsmittel hinzugefügt wird. Die genauen Masseanteile sind in Tab.1 angegeben.

**Tab.1**

| Komponente | Bestandteil | Massenanteil in % |
|---|---|---|
| A | Leinöl | 27,0 |
| | Natriumalginat | 1,6 |
| | Kreide | 5,8 |
| | Kieselgur | 5,8 |
| | Natriumphosphat | 0,3 |
| | Calciumsulfat | 1,0 |
| B | Naturlatex-Dispersion, 60 % NR | 22,4 |
| | Wasser | 35,0 |
| | Kaliumhydroxid | 0,2 |
| | Zinkoxid | 0,9 |

Unmittelbar vor dem Auftragen des Materials auf Biomasse werden die Komponenten A und B miteinander vermischt. Das Ausbilden der Netzstrukturen und eines berührungsfesten Materials dauern nach dem Vermischen der beiden Komponenten ungefähr 2 Stunden. Nach weiteren 22 Stunden ist das Material vollständig ausgehärtet. Danach steht ein Abdeckmaterial für Biomasse zur Verfügung, welches die Biomasse vor Luftsauerstoff und Umwelteinflüssen schützt, beständig gegenüber biochemischen Abbauprodukten der Biomasse ist, keine zusätzlichen Befestigungshilfen benötigt und einfach mit der Biomasse abgetragen und in einer Biogasanlage verwertet werden kann.

In Tab. 1 ist beispielhaft ein exaktes Mischungsverhältnis für Bestandteile eines Biomasseabdeckmaterials veranschaulicht. Tab. 2 zeigt bezogen auf das in Tab.1 angegebene Ausführungsbeispiel vorteilhafte Masseanteilsbereiche der Materialbestandteile, innerhalb denen je nach Anwendungsfall die Eigenschaften des Abdeckmaterials (beispielsweise hinsichtlich Verzögerung des Ausbildens der Netzwerkstrukturen, Konsistenz des Abdeckmaterials und Aushärtzeit) eingestellt werden können.

**Tab.2**

| Komponente | Bestandteil | Massenanteil in % |
|---|---|---|
| A | Leinöl | 5 - 80 |
| | Natriumalginat | 0,5 - 10 |
| | Kreide | 0 - 30 |
| | Kieselgur | 0 - 30 |
| | Natriumphosphat | 0,05 - 5 |
| | Calciumsulfat | 0 - 5 |
| B | Naturlatex-Dispersion, 60 % NR | 10 - 50 |
| | Wasser | 0 - 50 |
| | Kaliumhydroxid | 0,05 - 5 |
| | Zinkoxid | 0,05 - 5 |

## Patentansprüche

1. Abdeckmaterial für Biomasse, bestehend aus einer Mischung von mindestens zwei Komponenten A und B, wobei Komponente A ein Öl tierischer oder pflanzlicher Herkunft und ein Alginat umfasst und Komponente B eine wässrige Latexdispersion oder/und ein in Wasser gelöstes Protein umfasst.

2. Abdeckmaterial nach Anspruch 1, **dadurch gekennzeichnet, dass** das pflanzliche Öl Leinöl, Rapsöl, Sonnenblumenöl, Sojaöl, Palmöl, Palmkernöl, Kokosöl, Leindotteröl oder/und Maisöl ist.

3. Abdeckmaterial nach Anspruch 1 oder 2, **dadurch gekennzeichnet, dass** das Alginat Natriumalginat oder/und Kaliumalginat ist.

4. Abdeckmaterial nach einem der vorhergehenden Ansprüche, **dadurch gekennzeichnet, dass** Komponente A einen Füllstoff umfasst.

5. Abdeckmaterial nach einem der vorhergehenden Ansprüche, **dadurch gekennzeichnet, dass** Komponente A einen Verzögerer umfasst.

6. Abdeckmaterial nach einem der vorhergehenden Ansprüche, **dadurch gekennzeichnet, dass** Komponente A ein Treibmittel umfasst.

7. Abdeckmaterial nach einem der vorhergehenden Ansprüche, **dadurch gekennzeichnet, dass** die wässrige Latexdispersion eine Dispersion aus natürlichem oder/und synthetischem Latex ist.

8. Abdeckmaterial nach einem der vorhergehenden Ansprüche, **dadurch gekennzeichnet, dass** Komponente B einen Verzögerer oder einen Beschleuniger umfasst.

9. Abdeckmaterial nach einem der vorhergehenden Ansprüche, **dadurch gekennzeichnet, dass** dieses ein Konservierungsmittel umfasst.

10. Abdeckmaterial nach einem der vorhergehenden Ansprüche, **dadurch gekennzeichnet, dass** dieses als Schaum ausgebildet ist.

11. Verfahren zum Herstellen eines Abdeckmaterials für Biomasse, bei dem mindestens zwei Komponenten A und B vermischt und anschließend auf die Biomasse aufgetragen werden, wobei Komponente A ein Öl tierischer oder pflanzlicher Herkunft und ein Alginat umfasst und Komponente B eine wässrige Latexdispersion oder/und in Wasser gelöstes Protein umfasst.

12. Verfahren nach Anspruch 11, **dadurch gekennzeichnet, dass** als pflanzliches Öl Leinöl, Rapsöl, Sonnenblumenöl, Sojaöl, Palmöl, Palmkernöl, Kokosöl, Leindotteröl oder/und Maisöl verwendet werden.

13. Verfahren nach einem der Ansprüche 11 oder 12, **dadurch gekennzeichnet, dass** Natriumalginat oder/und Kaliumalginat als Alginat verwendet werden.

14. Verfahren nach einem der Ansprüche 11 bis 13, **dadurch gekennzeichnet, dass** der Komponente A ein Füllstoff beigemischt wird.

15. Verfahren nach einem der Ansprüche 11 bis 14, **dadurch gekennzeichnet, dass** der Komponente A ein Verzögerer beigemischt wird.

16. Verfahren nach einem der Ansprüche 11 bis 15, **dadurch gekennzeichnet, dass** der Komponente A ein Treibmittel beigemischt wird.

17. Verfahren nach einem der Ansprüche 11 bis 16, **dadurch gekennzeichnet, dass** der Komponente B ein Verzögerer oder ein Beschleuniger beigemischt wird.

18. Verfahren nach einem der Ansprüche 11 bis 17, **dadurch gekennzeichnet, dass** das Material durch Spritzen, Gießen, Streichen, Rakeln oder Spachteln auf die Biomasse aufgetragen wird.

19. Verfahren nach einem der Ansprüche 11 bis 18, **dadurch gekennzeichnet, dass** das Mischen der Komponenten A und B sowie das Auftragen des Materials auf die Biomasse mittels eines Mehrkomponenten-Spritzsystems erfolgt.

20. Verfahren nach Anspruch 19, **dadurch gekennzeichnet, dass** das Auftragen des Materials auf die Biomasse mittels Druckluft erfolgt.

21. Verfahren nach einem der Ansprüche 11 bis 20, **dadurch gekennzeichnet, dass** die Komponenten A und B zu einer fließfähigen Masse oder zu einem Schaum vermischt werden.

## Claims

1. Covering material for biomass comprising a mixture of at least two components A and B, wherein component A comprises an oil of animal or vegetable origin and an alginate and component B comprises an aqueous latex dispersion or/and a protein dissolved in water.

2. Covering material according to Claim 1, **characterized in that** the vegetable oil is linseed oil, rapeseed oil, sunflower oil, soya oil, palm oil, palm kernel oil, coconut oil, camelina oil or/and corn oil.

3. Covering material according to Claim 1 or 2, **characterized in that** the alginate is sodium alginate or/and potassium alginate.

4. Covering material according to any one of the preceding claims, **characterized in that** component A comprises a filler.

5. Covering material according to any one of the preceding claims, **characterized in that** component A comprises a retardant.

6. Covering material according to any one of the preceding claims, **characterized in that** component A comprises a blowing agent.

7. Covering material according to any one of the preceding claims, **characterized in that** the aqueous latex dispersion is a dispersion of natural or/and synthetic latex.

8. Covering material according to any one of the preceding claims, **characterized in that** component B comprises a retardant or an accelerator.

9. Covering material according to any one of the preceding claims, **characterized in that** this covering material comprises a preservative.

10. Covering material according to any one of the preceding claims, **characterized in that** this covering material is formed as a foam.

11. Process for producing a covering material for biomass, in which at least two components A and B are mixed and are then applied to the biomass, wherein component A comprises an oil of animal or vegetable origin and an alginate and component B comprises an aqueous latex dispersion or/and protein dissolved in water.

12. Process according to Claim 11, **characterized in that** the vegetable oil used is linseed oil, rapeseed oil, sunflower oil, soya oil, palm oil, palm kernel oil, coconut oil, camelina oil or/and corn oil.

13. Process according to any one of Claims 11 or 12, **characterized in that** sodium alginate or/and potassium alginate are used as alginate.

14. Process according to any one of Claims 11 to 13, **characterized in that** a filler is added to the component A.

15. Process according to any one of Claims 11 to 14, **characterized in that** a retardant is added to the component A.

16. Process according to any one of Claims 11 to 15, **characterized in that** a blowing agent is added to the component A.

17. Process according to any one of Claims 11 to 16, **characterized in that** a retardant or an accelerator is added to the component B.

18. Process according to any one of Claims 11 to 17, **characterized in that** the material is applied to the biomass by spraying, casting, painting, doctoring or spatula application.

19. Process according to any one of Claims 11 to 18, **characterized in that** the components A and B are mixed, and also the material is applied to the biomass, by means of a multicomponent spray system.

20. Process according to Claim 19, **characterized in that** the material is applied to the biomass by means of compressed air.

21. Process according to any one of Claims 11 to 20, **characterized in that** the components A and B are mixed to form a free-flowing mass or to form a foam.

## Revendications

1. Matériau de recouvrement pour biomasse, constitué par un mélange d'au moins deux composants A et B, où le composant A comprend une huile d'origine animale ou végétale et un alginate et le composant B comprend une dispersion aqueuse de latex et/ou une protéine dissoute dans l'eau.

2. Matériau de recouvrement selon la revendication 1, **caractérisé en ce que** l'huile végétale est de l'huile de lin, de colza, de tournesol, de soja, de palme, de palmiste, de coco, de caméline et/ou de maïs.

3. Matériau de recouvrement selon la revendication 1 ou 2, **caractérisé en ce que** l'alginate est de l'alginate de sodium et/ou de l'alginate de potassium.

4. Matériau de recouvrement selon l'une quelconque des revendications précédentes, **caractérisé en ce que** le composant A comprend une charge.

5. Matériau de recouvrement selon l'une quelconque des revendications précédentes, **caractérisé en ce que** le composant A comprend un retardateur.

6. Matériau de recouvrement selon l'une quelconque des revendications précédentes, **caractérisé en ce que** le composant A comprend un agent gonflant.

7. Matériau de recouvrement selon l'une quelconque des revendications précédentes, **caractérisé en ce que** la dispersion aqueuse de latex est une dispersion de latex naturel et/ou synthétique.

8. Matériau de recouvrement selon l'une quelconque des revendications précédentes, **caractérisé en ce que** le composant B comprend un retardateur ou un accélérateur.

9. Matériau de recouvrement selon l'une quelconque des revendications précédentes, **caractérisé en ce qu'**il comprend un conservateur.

10. Matériau de recouvrement selon l'une quelconque des revendications précédentes, **caractérisé en ce qu'**il est réalisé sous forme de mousse.

11. Procédé pour la fabrication d'un matériau de recouvrement pour biomasse, dans lequel on mélange au moins deux composants A et B puis on les applique sur la biomasse, où le composant A comprend une huile d'origine animale ou végétale et un alginate et le composant B comprend une dispersion aqueuse de latex et/ou une protéine dissoute dans l'eau.

12. Procédé selon la revendication 11, **caractérisé en ce qu'**on utilise comme huile végétale de l'huile de lin, de colza, de tournesol, de soja, de palme, de palmiste, de coco, de caméline et/ou de maïs.

13. Procédé selon l'une quelconque des revendications 11 ou 12, **caractérisé en ce qu'**on utilise de l'alginate de sodium et/ou de l'alginate de potassium comme alginate.

14. Procédé selon l'une quelconque des revendications 11 à 13, **caractérisé en ce qu'**une charge est mélangée dans le composant A.

15. Procédé selon l'une quelconque des revendications 11 à 14, **caractérisé en ce qu'**un retardateur est mélangé dans le composant A.

16. Procédé selon l'une quelconque des revendications 11 à 15, **caractérisé en ce qu'**un agent gonflant est mélangé dans le composant A.

17. Procédé selon l'une quelconque des revendications 11 à 16, **caractérisé en ce qu'**un retardateur ou un accélérateur est mélangé dans le composant B.

18. Procédé selon l'une quelconque des revendications 11 à 17, **caractérisé en ce que** le matériau est appliqué par pulvérisation, arrosage, au pinceau, à la racle ou à la spatule sur la biomasse.

19. Procédé selon l'une quelconque des revendications 11 à 18, **caractérisé en ce que** le mélange des composants A et B ainsi que l'application du matériau sur la biomasse sont réalisés au moyen d'un système de pulvérisation à plusieurs composants.

20. Procédé selon la revendication 19, **caractérisé en ce que** l'application du matériau sur la biomasse est réalisée à l'air comprimé.

21. Procédé selon l'une quelconque des revendications 11 à 20, **caractérisé en ce que** les composants A et B sont mélangés en une masse pouvant s'écouler ou en une mousse.
